# EUROPEAN PATENT SPECIFICATION

(11) **EP 1 143 371 B1**
(45) Date of publication and mention of the grant of the patent: **11.04.2007**
(21) Application number: 01400843.7
(22) Date of filing: 03.04.2001
(51) Int. Cl.: G06K 7/00

(54) **Electrical connector**
Elektrischer Verbinder
Connecteur électrique

(30) Priority: 04.04.2000 JP 2000106688
(43) Date of publication of application: 10.10.2001
(73) Proprietor: J.S.T. Mfg. Co., Ltd., Osaka-shi, Osaka 542-0081 (JP)
(72) Inventor: Kunihiro, Higuchi, Nishinomiya-shi, Hyogo 663-8122 (JP)
(74) Representative: Dronne, Guy

(56) References cited:
- EP-A- 0 803 833
- EP-A- 0 924 640
- EP-A- 0 976 082
- US-A- 5 713 747
- US-A- 5 877 488
- US-B1- 6 324 064

## Description

### BACKGROUND OF THE INVENTION

In recent years, PC cards, which are in conformity with the standard such as PCMCIA, have come to be used as recording media for electronic apparatuses such as personal computers. The PC card serving as a memory card is provided with a semiconductor memory, such as a flash memory, mounted inside thereof. A socket connector having a number of sockets is attached to one end face of the PC card, and this is connected to an electronic apparatus such as a personal computer through a PC card connector having a number of pin contacts, with the pin contacts being respectively inserted to these sockets. Here, smart cards, which have virtually the same size as the PC cards and have IC chips packaged thereon, have come to be widely used. Some of the smart cards have a plurality of conductive pads formed on one of the main surfaces, and each of these smart cards is connected to an electronic apparatus of various kinds through a smart card connector having contacts that are respectively allowed to contact the conductive pads.

The two types of connectors, that is, PC card connectors and smart card connectors, are manufactured as respectively different products. For this reason, in order to use both of the PC card and smart card in an electronic apparatus such as a personal computer, two connectors, a PC card connector and a smart card connector, have to be attached to a substrate. However, attaching two connectors to the substrate not only causes complex attaching processes, and but also requires a large occupied area for the connectors on the substrate, resulting in a failure to respond to demands for miniaturization of electronic apparatuses.

In addition, the document US 5,713,747 describes two PC card connectors, which are stacked together but does not envisage to associate a PC card connector and a smart card connector.

### SUMMARY OF THE INVENTION

In order to solve the above-mentioned problems, the main object of the present invention is to provide an electrical connector which is applicable to both of a card device having a socket connector on its end face, such as a PC card, and a card device having conductive pads on its main surface, such as a certain type of a smart card, and is also easily attached to a substrate with a comparatively narrow occupied area.

The electrical connector of the present invention is provided with a first memory attaching section and a second memory attaching section. The first memory attaching section is provided with pin contacts which, upon attaching a first card device having a socket on its end face, are inserted to the socket. Moreover, the second memory attaching section is arranged so as to overlap the first memory attaching section at least at one portion thereof, and is provided with contacts which, upon attaching a second card device having conductive pads on its main surface, are allowed to contact the conductive pads.

Moreover, in the present invention, it is preferable to provide an arrangement in which the entire first memory attaching section is virtually superposed on the entire second memory attaching section.

Furthermore, in the present invention, the end portion of the pin contact on the side opposite to the end portion to be inserted to the socket and the end portion of the contact on the side opposite to the end portion to contact the conductive pads may be extended in a direction from the first memory attaching section toward the second memory attaching section.

In the present invention, the first memory attaching section may include a first housing having a main body section to which said pin contacts are attached and two arm portions that respectively protrude from both of the sides of said main body section to regulate the inserting direction of said first card device. The second memory attaching section may include a second housing for regulating the inserting direction of the second card device, and a cover that is combined with the second housing.

Moreover, in the present invention, the first card device may be a PC card, and the second card device may be a smart card. With respect to the PC card, in addition to a memory card, cards such as a LAN card and a modem card may be used. With respect to the memory mounted in these card devices, generally, semiconductor memories, such as SRAM, DRAM and EEPROM, are used; however, a magnetic storage memory such as a hard disk may be used.

Other and further objects, features and advantages of the invention will appear more fully from the following description taken in connection with the accompanying drawings.

### BRIEF DESCRIPTION OF THE DRAWINGS

FIG. 1 is an exploded perspective view that shows an electrical connector in accordance with one embodiment of the present invention.
FIG. 2 is a perspective view that shows the electrical connector shown in FIG. 1 as assembled.
FIG. 3 is a top view of the electrical connector shown in FIG. 2.
FIG. 4 is a side view of the electrical connector shown in FIG. 2.

### DESCRIPTION OF THE PREFERRED EMBODIMENT

The following description will discuss one embodiment of the present invention. However, this only shows one example of the present invention, and the present invention is not intended to be limited by this embodiment.

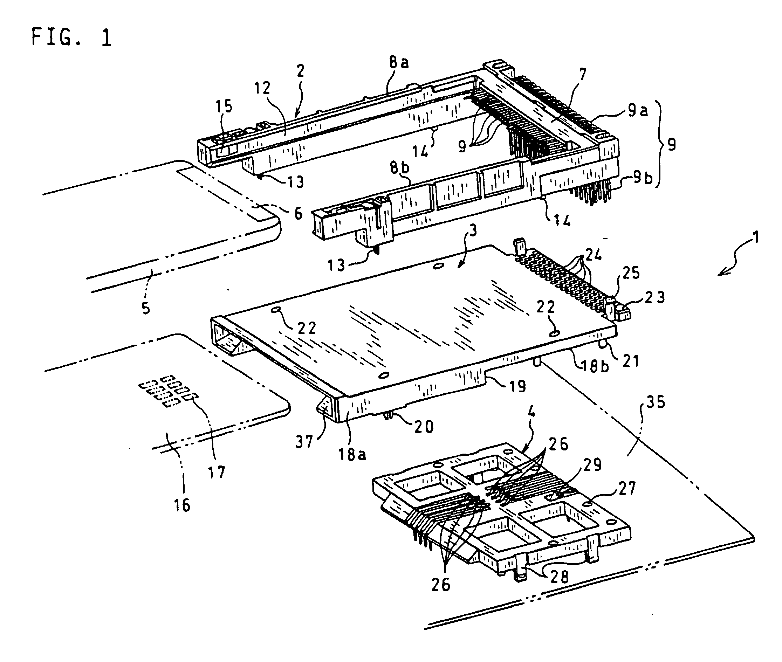

FIG. 1 is an exploded view that shows the entire structure of an electrical connector 1 in detail in accordance with the present embodiment, which is attached to an electronic apparatus such as a personal computer. FIG. 1 shows a state in which the electrical connector 1 provided with a first housing 2, a second housing 3 and a cover 4 is placed before being assembled through engagements. In the present embodiment, the first housing 2 constitutes a first memory attaching section, and the second housing 3 and the cover 4 constitute a second memory attaching section.

To the first housing 2, a PC card 5, which is a first card device that is in conformity with the PCMCIA standard, can be attached. The PC card 5 to be inserted to the first housing 2 has a rectangular plane shape, and one end face that is one of the shorter sides is provided with a number of sockets (socket contacts: not shown) supported inside a socket connector 6.

The first housing 2 is provided with a main body section 7 that is extended in one direction, and two arm portions 8a and 8b protruding from both of the sides of the main body section 7. A number of pin contacts 9 are secured to the main body section 7, and upon attaching a PC card 5 thereto, one end of each pin contact 9 is inserted to each socket. The pin contact 9, made of a metal conductive material, is bent with a right angle so as to form a horizontal portion 9a and a vertical portion 9b. Here, a number of pin contacts 9 are arranged in upper and lower two rows on the horizontal portion 9a in the pin contacts 9, and also arranged in before and after four rows in a scattered manner on the vertical portion 9b. The horizontal portion 9a of the pin contact 9 is inserted into the main body section 7, and extended in the same direction as the arm portions 8a and 8b. When a PC card 5 is attached to the first housing 2, the pin contact 9 allows the PC card 5 and a printed substrate 35 of the electronic apparatus to be connected to each other.

As illustrated in FIG. 1, the two arm portions 8a and 8b protrude from both of the sides of the main body section 7 in the same direction as the horizontal portion 9a of the pin contact 9. Guide grooves 12 for guiding the PC card 5 are formed in the arm portions 8a and 8b in the extending direction. The guide grooves 12 extend from the tips of the arm portions 8a and 8b to the main body section 7. When a PC card 5 is attached to the first housing 2, these arm portions 8a and 8b guide both of the width end portions of the PC card 5 so as to allow the pin contacts 9 to be easily inserted to the sockets.

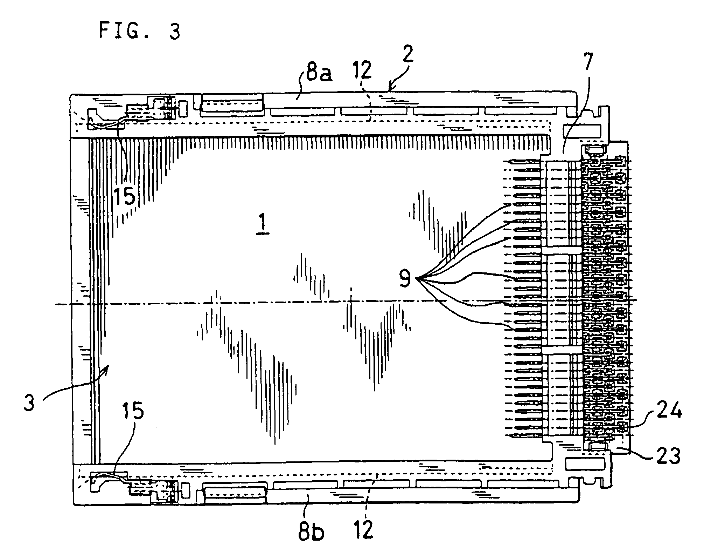

A first protrusion 13 and a first pin 14 are formed on each bottom faces of the arm portions 8a and 8b. The first protrusion 13 is placed on the tip end side of each arm portion 8a, 8b, and protrudes downward from the arm portion 8a, 8b. The first protrusion 13 is formed into a bifurcated shape by a conductive material such as spring steel. As illustrated in FIGS. 1 and 3, the first protrusion 13 is electrically connected to a short-circuiting clip 15 that protrudes from the bottom section on the tip end side of the guide groove 12. For example, the short-circuiting clip 15 may be integrally formed with the first protrusion 13 by using an elastic conductive material such as spring steel. The first protrusion 13 is allowed to engage with the second housing 3 in the first engaging hole 22 formed in the second housing 3. Moreover, the first protrusion 13 functions to connect the PC card 5 to the ground by allowing both of the width side ends of the PC card 5 inserted to the guide grooves 12 to contact the short-circuiting clip 15. The first pin 14 is placed on the main body section 7 side of each of the arm portions 8a, 8b, and protrudes downward from the arm portion 8a, 8b. The first pin 14 is allowed to engage with the second housing 3 inside the first engaging hole 22 formed in the second housing 3. The first protrusion 13 and the first pin 14 are allowed to engage with the second housing 3 inside the first engaging hole 22 so that the first housing 2 and the second housing 3 are supported by each other, and firmly secured.

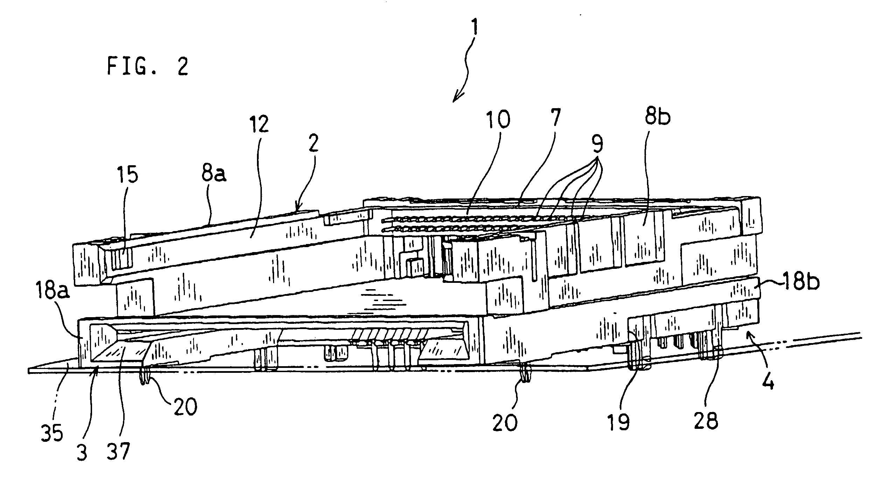

As illustrated in FIGS. 2 and 3, the second housing 3 is placed below the main body section 7 and the arm portions 8a and 8b of the first housing 2 in a manner so as to be virtually overlapped by these. In other words, the entire first housing 2 is placed in a manner so as to overlap the entire second housing 3 in a direction virtually orthogonal to the main surface of the PC card 5 (and a smart card 16, which will be described later). The main body section 7 and the arm portions 8a, 8b of the first housing 2, as well as the first pin 14, are preferably formed by an insulating plastic material.

As illustrated in FIG. 1, the second housing 3 allows a smart card 16 (having virtually the same size as the PC card 5) that is a second card device to be attached thereto. In other words, the electrical connector 1 of the present embodiment allows both the PC card 5 and the smart card 16 to be simultaneously attached thereto. A conductive pad 17 for inputting and outputting data is placed on the rear surface of the smart card 16. The conductive pad 17 is made of a metal conductive material, and divided into a plurality of terminals.

On the right and left sides of the second housing 3, guide portions 18a and 18b having different widths are respectively formed with a step-difference portion 19 located in between as a border. Each guide portion 18a having a width wider than the guide portion 18b is extended downward from both of the width sides of the second housing 3, and is bent inward to the second housing 3 at the lower end. The right and left paired guide portions 18a form an insertion space 37 through which the smart card 16 is inserted into the second housing 3; thus, these function to guide both of the width side ends of the smart card 16. The guide portion 18b, which has a width narrower than that of the guide portion 18a and also has a paired shape on its right and left sides, is formed so as to connect to the guide portion 18a. The guide portion 18b is extended from the middle portion of the second housing 3 having the step-difference portion 19 to the end portion at which an extended portion 23 which will be described later is formed. The second housing 3 has virtually the same width and length as those of the smart card 16 in the area in which the guide portion 18b is formed. The cover 4, which will be described later, is combined with the second housing 3 in the guide portion 18b, and secured thereto.

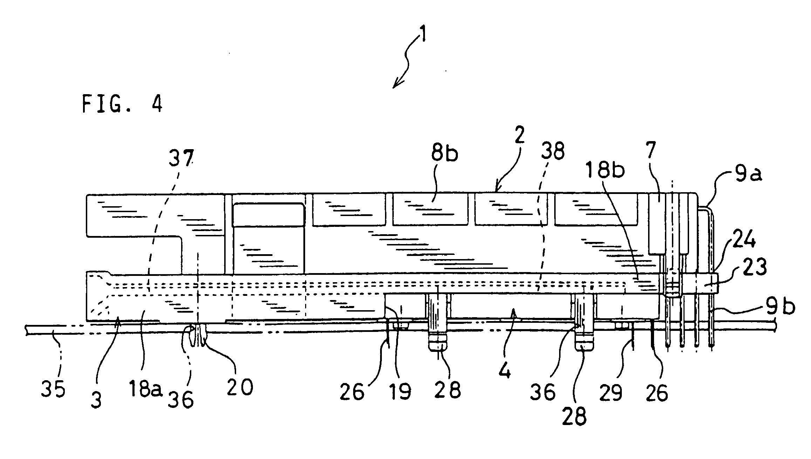

A second protrusion 20 and second pins 21 are respectively formed on each bottom faces of the guide portion 18a and the guide portion 18b. As illustrated in FIGS. 2 and 4, the second protrusion 20 is formed into a bifurcated shape, and protrudes downward from the guide portion 18a. The second protrusion 20 is allowed to engage with the printed substrate 35 within an attaching hole 36 (see FIG. 4) formed in the printed substrate 35 so that it functions to allow the second housing 3 and the printed substrate 35 to be supported by each other. The plurality of second pins 21 protrude downward from the lower face of the guide portion 18b. The second pins 21 are allowed to engage with the cover 4 within the second engaging holes 27 formed in the upper surface of the cover 4 so that they function to allow the cover 4 and the second housing 3 to be supported by each other.

A plurality of first engaging holes 22 are formed in the upper surface of the second housing 3. The first protrusion 13 and the first pin 14 of the first housing 2 are inserted into the first engaging holes 22. Thus, the first protrusion 13 and the first pin 14 are allowed to engage with the second housing 3 in the first engaging hole 22 so as to allow the first housing 2 and the second housing 3 to be supported by each other.

The second housing 3 is provided with the extended portion 23 at the end portion on the side opposite to the insertion space 37. As illustrated in FIGS. 3 and 4, the extended portion 23 is extended to an area corresponding to the vertical portion 9b of the pin contact 9. Moreover, a number of insertion holes 24, arranged in four rows, are formed in the extended portion 23. The vertical portion 9b of each pin contact 9 is inserted to each insertion hole 24 so that the pin contacts 9 are positioned, and maintained in a good aligned state; thus, these holes 24 make the pin contacts 9 connectable to the printed substrate 35. Moreover, on both of the width side ends of the extended portion 23, stopping pins 25 are placed. These stopping pins 25 protrude upward from the extended portion 23. The stopping pins 25 are allowed to engage with the first housing 2 in holes (not shown) formed in the first housing 2 so as to allow the first housing 2 and the second housing 3 to be supported by each other.

As illustrated in FIGS. 2 and 3, the second housing 3 has the same length and width as those of the first housing 2. The second housing 3 is preferably formed by using an appropriate insulating plastic material together with the second pins 21 and the extended portion 23, etc., except for the second protrusions 20. The main body section 7 and the arm portions 8a and 8b of the first housing 2 are placed on the second housing 3, and the first protrusions 13 and the first pins 14 are inserted into the first engaging holes 22 so that the first housing 2 and the second housing 3 are integrated with each other in a superposed manner. Here, since the second protrusion 20 is electrically connected to the first protrusion 13 of the first housing 2 in the first engaging hole 22, the PC card 5 is grounded to the printed substrate 35 through the short-circuiting clip 15, the first protrusion 13 and the second protrusion 20.

As illustrated in FIG. 1, the cover 4 makes the smart card 16 connectable to the printed substrate 35. On the upper surface of the cover 4, a number of contacts 26 are formed and arranged in two rows. Each of the contacts 26, which is made of an elastic conductive material such as spring steel, is bent with an acute angle in the vicinity of one end thereof, and the bent portion is allowed to protrude from the upper surface of the cover 4 so that the smart card 16 is allowed to contact the conductive pads 17. Moreover, each of the contacts 26 has the other end extended below the cover 4 so as to be connectable to the printed substrate 35. The cover 4 allows each contact 26 to contact each terminal of the conductive pads 17 of the smart card 16, thereby allowing the smart card 16 to connect to the substrate 35.

In the upper surface of the cover 4, a plurality of second engaging holes 27 are formed. The second pins 21 are inserted to the second engaging holes 27 so that the cover 4 and the second housing 3 are engaged by each other so as to be integrally supported. Moreover, on the side face of the cover 4, a plurality of attaching pins 28, which protrude downward from the lower surface of the cover 4, are formed. When the attaching pins 28 are fitted and inserted to attaching holes 36 (see FIG. 4), the cover 4 and the substrate 35 are engaged by each other so as to be integrally supported. Here, a detection switch 29 for detecting the presence or absence of the card upon contact with the smart card 16 is installed in the cover 4.

As illustrated in FIGS. 2 and 4, the cover 4 is attached in a manner so as to cover the lower surface of the second housing 3 in the guide portion 18b. By inserting the second pins 21 into the second engaging holes 27, the cover 4 can be attached to the lower side of the second housing 3 in the vicinity of the side end of the extended portion 23. As illustrated in FIG. 4, the cover 4 forms a contact space 38 connecting to the insertion space 37 in the second housing 3. In the case when the smart card 16 is placed in the contact space 38, the conductive pads 17 are allowed to contact the respective contacts 26. In this manner, in the present embodiment, the second memory attaching section is constituted by the cover 4 and the second housing 3, and the contacts 26 are placed on the surface of the cover 4 facing the second housing 3; thus, after the contacts 26 have been attached to the cover 4, this is assembled to the second housing so that the attaching job of the contacts 26 to the second memory attaching section can be easily carried out. Here, the cover 4 is preferably molded by an appropriate non-conductive plastic material.

Next, referring to FIGS. 1 to 4, an explanation will be given of the assembling sequence of the electrical connector 1 in accordance with the present embodiment. First, as illustrated in FIG. 1, the arm portions 8a and 8b and the main body section 7 of the first housing 2 are placed on the second housing 3. Then, the first protrusion 13 and the first pin 14 of each of the arm portions 8a, 8b are inserted to the first engaging holes 22 in the second housing 3 so that the first housing 2 and the second housing 3 are engaged by each other. Simultaneously, the stopping pins 25 of the second housing 3 are engaged in the main body section 7 of the first housing 3 to be stopped therein. Thus, the two members are secured to each other and maintained. In this case, the vertical portion 9b of each pin contact 9 is inserted through each insertion hole 24 of the extended portion 23, as illustrated in FIG. 4.

As illustrated in FIGS. 2 to 4, in the present embodiment, the first housing 2 is placed on the second housing 3 having virtually the same external size as this in a manner so as to virtually superpose on the entire portion thereof (that is, with no portion of one protruding from the other, when viewed from above). Therefore, the electric connector 1 of the present embodiment makes it possible to reduce the occupied area on the substrate 35 to a minimum, thereby achieving small sizes of the substrate 35 and an electronic apparatus in which this is assembled.

Thereafter, as illustrated in FIG. 1, the cover 4 is attached to the lower side of the second housing 3 with the contacts 26 facing the second housing 3 side. Thus, the cover 4 is fitted into the guide portion 18b in the second housing 3. At the same time, the second pins 21 of the second housing 3 are inserted into the second engaging holes 27. Thus, the cover 4 is superposed on the second housing 3 with no portion being protruding from the other so that the two parts are integrally secured and supported; thus, the contact space 38 is formed between the cover 4 and the second housing 3. In this manner, the electrical connector 1 of the present embodiment makes it possible to provide a structure with high reliability in which the first housing 2, the second housing 3 and the cover 4 are firmly secured to each other through engagements of the respective members.

Here, the above-mentioned assembling processes may be carried out in the reversed manner. In other words, after the cover 4 has been fitted into the guide portion 18b of the second housing 3, the first housing 2 may be superposed on the second housing 3.

As clearly shown by the above descriptions and attached drawings, the electrical connector 1 of the present embodiment has a rectangular shape in which the first housing 2, the second housing 3 and the cover 4 are superposed in the vertical direction (in other words, in the direction orthogonal to the main surfaces of the PC card 5 and the smart card 16) so as to be secured and supported by each other. As illustrated in FIG. 4, the second protrusion 20 and the attaching pins 28, which are inserted into the attaching holes 36 of the printed substrate 35, are allowed to engage with the substrate 35 in the attaching holes 36 so that the electrical connector 1 is attached to the substrate 35, thereby allowing each pin contact 9 and one end of each contact 26 to be electrically connected to the printed substrate 35. In this manner, in the electrical connector 1 of the present embodiment, the first housing 2, the second housing 3 and the cover 4 are superposed in the vertical direction so as to form an integral unit so that the attaching process to the substrate 35 is simplified, and the occupied area on the substrate 35 is also minimized.

Moreover, in the electrical connector 1 of the present embodiment, the first housing 2 is placed on the second housing 3 while the cover 4 is placed under the second housing 3 so that the pin contacts 9 and the contacts 26 are arranged efficiently and these are allowed to be electrically connected to the printed substrate 35. As illustrated in FIG. 4, the contacts 26 are arranged closer to the insertion slot side of the PC card 5 and the smart card 16 than to the pin contacts 9 so that they are electrically connected to the printed substrate 35 without contacting the pin contacts 9.

In the electrical connector 1 of the present embodiment, conventionally used members can be used as the first housing 2 and the cover 4. The second housing 3 is preferably formed so as to have the same length and size as those of the first housing 2 so that the first housing 2 is placed thereon. Moreover, the second housing 3 is modified in designing so as to form the extended portion 23 through which the vertical portion 9b of each pin contact 9 is inserted and a guide portion 18b to which the cover 4 is attached.

Furthermore, in the electrical connector 1 of the present embodiment, the first memory attaching section to which the PC card is attached is placed on the side opposite to the substrate with respect to the second memory attaching section to which the smart card is attached; however, in the reversed manner, the second memory attaching section may be placed on the side opposite to the substrate with respect to the first memory attaching section. However, the above-mentioned arrangement of the embodiment makes the contacts 26 shorter with less bent portion, thereby making it possible to more simplify the structure of the second memory attaching section.

Moreover, in the electrical connector 1 of the present embodiment, the first housing 2 and the second housing 3 are placed so as to virtually overlap each other in their entire portions; however, the first housing 2 and the second housing 3 may be placed with only one portion overlapping each other. However, as described in the present embodiment, in the case when the first housing 2 and the second housing 3 are placed so as to virtually overlap each other in their entire portions, it becomes possible to reduce the occupied area of the electrical connector 1 on the substrate to a minimum.

In the electrical connector 1 in the present embodiment, the PC card 5 is attached to the guide groove 12 of the first housing 2, and the pin contacts 9 are fitted to the sockets so that the PC card 5 is connected to an electronic apparatus. Moreover, in the electrical connector 1, the smart card 16 is inserted from the insertion space 37 of the second housing 3 into the contact space 38 so that each terminal of the conductive pad 17 is made in contact with each contact 26; thus, it becomes possible to connect the smart card 16 to an external electronic apparatus. Therefore, in the electrical connector 1 of the present invention makes it possible to connect the PC card 5 and the smart card 16 to an electronic apparatus so as to be used therein simultaneously or in a separate manner, without the need of exchanging these.

While there have been shown herein and described certain preferred embodiment of the invention, various design changes and modifications may be made within the scope of the claimed invention without limiting the illustrated embodiment. For example, in the above-mentioned embodiment, the PC card that is in conformity with the PCMCIA standard is used; however, with respect to the PC card, any PC card may be used as long as it has sockets in its end face (for example, a compact flash card and a PC card adopter), and applicable PC cards are not limited to memory cards. Moreover, with respect to the smart card, any card other than memory cards may be used as long as conductive pads are provided on its main surface, and for example, smart media, etc. may be used. Furthermore, the plane shape and thickness of the PC card and the smart card are not necessarily set to the same. In the case when the two media have different plane shapes, provision is preferably made to add a structure so as to allow the user to easily insert and draw either of the two media (normally, smaller one).

In the above-mentioned embodiment, the second memory attaching section is constituted by two members, that is, the second housing and cover; however, the second memory attaching section may be constituted by one member. In contrast, the first memory attaching section may be constituted by not less than two members. Moreover, the electrical connector of the above-mentioned embodiment has one first memory attaching section and one second memory attaching section respectively; however, a plurality of first memory attaching sections and/or second memory attaching sections may be provided.

## Claims

1. An electrical connector (1) intended to be attached to a printed substrate (35) of an electrical apparatus, the electrical connector being able to receive a first card device having a socket (6) on an end face thereof, the electrical connector comprising:
a first memory attaching section (2) having pin contacts (9) which upon attaching said first card device are inserted in the socket (6) of the first card device; the electrical connector (1) being **characterized in that** it is further able to receive a second card device having conductive pads (17) on a main surface thereof, **in that** it further comprises a second memory attaching section (3) which is arranged so as to overlap said first memory attaching section at least at one portion thereof, and comprises contacts (26) which, upon attaching said second card device, are allowed to contact with the conductive pads (17) of the second card device;
wherein said pin contacts (9) and said contacts (26) are intended to be attached to said printed substrate (35).

2. The electrical connector (1) according to claim 1, wherein said first memory attaching section is placed in a manner so as to overlap the entire second memory attaching section.

3. The electrical connector (1) according to claim 1 or 2, wherein pin contacts (9) are bent down towards the second memory attaching section and the contacts (26) of the second memory attaching section extend in a direction opposite to the bent down pin contacts (9) from the first memory attaching section.

4. The electrical connector (1) according to claim 3, wherein said first memory attaching section includes a first housing (2) having a main body section (7) to which said pin contacts (9) are attached and two arm portions (8a, 8b) that respectively protrude from both of the sides of said main body section (7) to regulate the inserting direction of said first card device, and
wherein said second memory attaching section includes a second housing (3) for regulating an inserting direction of said second card device, and a cover (4) that is combined with said second housing (3).

5. The electrical connector (1) according to claim 4, wherein said contacts (26) are arranged on a surface of said cover (4) facing said second housing (3).

6. The electrical connector (1) according to claim 4, wherein said second housing (3) has an end portion in which a hole (24) is formed, with said pin contacts (9) being inserted in said hole (24).

7. The electrical connector (1) according to claim 4, wherein said first housing (2) and said second housing (3) are engaged by each other so as to be integrally supported while said second housing (3) and said cover (4) are engaged by each other so as to be integrally supported.

8. The electrical connector (1) according to claim 1, wherein said first card device is a PC card (5) and said second card device is a smart card (16).

## Patentansprüche

1. Elektrischer Verbinder (1) zum Befestigen an einer bedruckten Trägerplatte (35) eines elektrischen Geräts, wobei der elektrische Verbinder eine erste Kartenvorrichtung mit einem Sockel (6) an einer Endfläche davon aufnehmen kann, wobei der elektrische Verbinder folgendes umfasst:
einen ersten Speicherbefestigungsabschnitt (2) mit Stiftkontakten (9), die beim Befestigen der genannten ersten Kartenvorrichtung in den Sockel (6) der ersten Kartenvorrichtung eingeführt werden; der elektrische Verbinder (1) ist **dadurch gekennzeichnet, dass** er ferner eine zweite Kartenvorrichtung mit leitfähigen Feldern (17) an einer Hauptfläche davon aufnehmen kann und dass er außerdem einen zweiten Speicherbefestigungsabschnitt (3) aufweist, der so angeordnet ist, dass er den genannten ersten Speicherbefestigungsabschnitt zumindest in einem Teil davon überlappt sowie Kontakte (26) aufweist, die beim Befestigen der genannten zweiten Kartenvorrichtung mit den leitfähigen Feldern (17) der zweiten Kartenvorrichtung in Kontakt kommen dürfen;
wobei beabsichtigt ist, die genannten Stiftkontakte (9) und die genannten Kontakte (26) mit der genannten bedruckten Trägerplatte (35) zu verbinden.

2. Elektrischer Verbinder (1) nach Anspruch 1,
wobei der genannte erste Speicherbefestigungsabschnitt in einer Weise platziert ist, dass er den gesamten zweiten Speicherbefestigungsabschnitt überlappt.

3. Elektrischer Verbinder (1) nach Anspruch 1 oder 2,
wobei die Stiftkontakte (9) nach unten zu dem zweiten Speicherbefestigungsabschnitt hin gebogen sind und die Kontakte (26) des zweiten Speicherbefestigungsabschnitts sich in eine Richtung erstrecken, die der nach unten gebogenen Stiftkontakte (9) des ersten Speicherbefestigungsabschnitts entgegengesetzt ist.

4. Elektrischer Verbinder (1) nach Anspruch 3,
wobei der genannte erste Speicherbefestigungsabschnitt ein erstes Gehäuse (2) mit einem Hauptkörperabschnitt (7) aufweist, an dem die genannten Stiftkontakte (9) befestigt sind, sowie zwei Schenkelabschnitte (8a, 8b), die sich jeweils von einem Ende des Hauptkörperabschnitts (7) aus erstrecken, um die Einführrichtung der genannten ersten Kartenvorrichtung vorzugeben, und
wobei der genannte zweite Speicherbefestigungsabschnitt ein zweites Gehäuse (3) umfasst, um eine Einführrichtung der genannten zweiten Kartenvorrichtung vorzugeben, sowie eine Abdeckung (4), die mit dem genannten zweiten Gehäuse (3) kombiniert ist.

5. Elektrischer Verbinder (1) nach Anspruch 4,
wobei die genannten Kontakte (26) auf einer Fläche der genannten Abdeckung (4) angeordnet sind, die dem genannten zweiten Gehäuse (3) zugewandt ist.

6. Elektrischer Verbinder (1) nach Anspruch 4,
wobei das genannte zweite Gehäuse (3) einen Endabschnitt aufweist, in dem eine Öffnung (24) ausgebildet ist, wobei die genannten Stiftkontakte (9) in die genannte Öffnung (24) eingesteckt sind.

7. Elektrischer Verbinder (1) nach Anspruch 4,
wobei das genannte erste Gehäuse (2) und das genannte zweite Gehäuse (3) miteinander im Eingriff sind, so dass sie sich gegenseitig stützen, während das genannte zweite Gehäuse (3) und die genannte Abdeckung (4) miteinander im Eingriff sind, so dass sie sich gegenseitig stützen.

8. Elektrischer Verbinder (1) nach Anspruch 1,
wobei die genannte erste Kartenvorrichtung eine PC-Karte (5) und die genannte zweite Kartenvorrichtung eine Chipkarte (16) ist.

## Revendications

1. Connecteur électrique (1) destiné à être monté sur un substrat imprimé (35) d'un appareil électrique, le connecteur électrique étant capable de recevoir un premier dispositif de carte ayant une interface de connexion (6) sur une face d'extrémité de celui-ci, le connecteur électrique comprenant :
une première section de montage de mémoire (2) ayant des contacts formant broches (9) qui, lors du montage dudit premier dispositif de carte, sont insérés dans l'interface de connexion (6) du premier dispositif de carte ; le connecteur électrique (1) étant **caractérisé en ce qu'**il est en outre capable de recevoir un second dispositif de carte ayant des languettes conductrices (17) sur une surface principale de celui-ci, **en ce qu'**il comprend en outre une seconde section de montage de mémoire (3) qui est agencée de manière à chevaucher ladite première section de montage de mémoire au moins sur une partie de celle-ci, et comprend des contacts (26) qui, lors du montage dudit second dispositif de carte, peuvent venir en contact avec les languettes conductrices (17) du second dispositif de carte ;
dans lequel lesdits contacts formant broches (9) et lesdits contacts (26) sont destinés à être fixés audit substrat imprimé (35).

2. Connecteur électrique (1) selon la revendication 1, dans lequel ladite première section de montage de mémoire est placée de manière à chevaucher la totalité de la seconde section de montage de mémoire.

3. Connecteur électrique (1) selon la revendication 1 ou 2, dans lequel les contacts formant broches (9) sont recourbés vers la seconde section de montage de mémoire et les contacts (26) de la seconde section de montage de mémoire s'étendent dans une direction opposée aux contacts formant broches recourbés (9) de la première section de montage de mémoire.

4. Connecteur électrique (1) selon la revendication 3, dans lequel ladite première section de montage de mémoire comprend un premier logement (2) ayant une section de corps principal (7) sur laquelle lesdits contacts formant broches (9) sont montés et deux parties de bras (8a, 8b) qui font respectivement saillie de chaque côté de la section de corps principal (7) pour réguler la direction d'insertion dudit premier dispositif de carte, et
dans lequel ladite seconde section de montage de mémoire comprend un second logement (3) pour réguler une direction d'insertion dudit second dispositif de carte, et un couvercle (4) qui est combiné audit second logement (3).

5. Connecteur électrique (1) selon la revendication 4, dans lequel lesdits contacts (26) sont agencés sur une surface dudit couvercle (4) faisant face audit second logement (3).

6. Connecteur électrique (1) selon la revendication 4, dans lequel ledit second logement (3) a une partie d'extrémité dans laquelle un trou (24) est formé, lesdits contacts formant broches (9) étant insérés dans ledit trou (24).

7. Connecteur électrique (1) selon la revendication 4, dans lequel ledit premier logement (2) et ledit second logement (3) sont engagés l'un par l'autre de façon à être supportés d'un seul tenant tandis que ledit second logement (3) et ledit couvercle (4) sont engagés l'un par l'autre de façon à être supportés d'un seul tenant.

8. Connecteur électrique (1) selon la revendication 1, dans lequel ledit premier dispositif de carte est une carte PC (5) et ledit second dispositif de carte est une carte à puce (16).
